# EUROPEAN PATENT SPECIFICATION

(11) **EP 2 564 726 B1**
(45) Date of publication and mention of the grant of the patent: **07.01.2015**
(21) Application number: 11007004.2
(22) Date of filing: 27.08.2011
(51) Int. Cl.: A46D 9/02, B26D 1/38, C23C 30/00, B26D 1/00

(54) **Method for providing an abrasion resistant cutting edge and trimming device having said cutting edge**
Verfahren zur Bereitstellung einer abriebfesten Schneidkante und Abschneidevorrichtung mit dieser Schneidkante
Procédé de fourniture de bord tranchant résistant à l'abrasion et dispositif de rognage doté de ce bord tranchant

(43) Date of publication of application: 06.03.2013
(73) Proprietor: Braun GmbH, 61476 Kronberg/Taunus (DE)
(72) Inventor: Nootbaar, Bernd, 55278 Uelversheim (DE); Eimann, Klaus, 97225 Zellingen (DE)
(74) Representative: Schneider, Stefan Michael

(56) References cited:
- EP-A1- 1 230 871
- EP-A1- 1 920 846
- DE-U1- 29 818 845
- US-A- 3 451 173

## Description

### FIELD OF THE INVENTION

The present disclosure relates to a method for producing an abrasion resistant cutting edge of a toothbrush filament trimming device. Said method comprises applying two layers of coatings for example using laser cladding, wherein the first layer may be formed by powder-metallurgical steel and the second layer may comprise hard carbide particles in a metal matrix. There is further provided a filament trimming device having such an abrasion resistant cutting edge.

### BACKGROUND OF THE INVENTION

A conventional brush, in particular a toothbrush, comprises a brush head and a shaft or a handle. Individual bristle filaments are grouped together to form bristle bundles or bristle tufts which are arranged in a predefined geometry onto the brush head. In some cases, said bristle tufts are fastened by anchors or anchor wires into blind ended tuft holes. For fastening, the tufts are looped or bent in a U-shaped configuration around said anchor wire, said staple or said anchor. Thereby the filament ends protrude from the brush surface in different lengths. Therefore, bristle tufts have to be cut after mounting into the toothbrush head. Trimming machines used for this purpose are intended to cut a huge amount of plastic filaments in a continuous high quality. Quality of the filament cut directly influences the following step of end rounding of the filaments. The better the filaments are cut, the easier the filaments are end rounded. Therefore, cutting tools must be hard and tough and must not bend or flex during machining. Cutters are usually made of steel or steel alloys, wherein hardness of steels depends on the alloy used. However, maximum hardness of steels is limited because increasing the hardness makes the steel more brittle and reduces toughness at the same time.

Further, abrasion will take the edge of the cutters over time so that the sharpness decreases, although cutters are made by hard steel. Thus, there is a need for abrasion resistant cutters. Further, harder steels are usually more expensive, but investment costs are a key feature in toothbrush business. Thus, it is the object of the present invention to provide an abrasion resistant cutter which is cost effective at the same time.

A toothbrush filament trimmer with a cutter and a counter knife is known from DE 298 18 845 U1.

### SUMMARY OF THE INVENTION

Several embodiments are disclosed in the independent claims to exemplify the subject-matter of the present disclosure. Further embodiments are disclosed by the subject matter of the dependent claims. In accordance with at least one aspect, there is provided a method for manufacturing a toothbrush filament trimmer comprising the steps of providing a cutter and/or a counter knife each consisting of hot-working tool steel, wherein the cutter and/or the counter knife comprise at least a recess suitable to carry a coating to form a cutting edge. The method further comprises the step of depositing a first material onto the at least one recess of the cutter and/or the counter knife to form a first layer, and depositing a second material onto each first layer to form a second layer, wherein at least a carbide of at least one element of the fourth, the fifth, the sixth and/or the seventh group of the periodic table is used as the second material. The first layer material may be a powder-metallurgical steel. Finally, the method comprises the step of sharpening the coating comprising the first layer and the second layer applied to the at least one recess of the cutter and/or to the at least one recess of the counter knife, wherein an abrasion resistant cutting edge is formed.

In accordance with another aspect, there is provided a filament trimming device for cutting filaments of a toothbrush comprising the features of claim 12.

### BRIEF DESCRIPTION OF DRAWINGS

These and other features will become apparent not only from the claims but also from the following description and the drawings, with the aid of which example embodiments are explained below.
- Fig. 1A: shows a perspective view of an example cutter 20 as disclosed herein, wherein eight cutting areas 24 are arranged along the outline of the cutter 20 and wherein each cutting area 24 comprises a cutting edge 12A having a convex contour;
- Fig. 1B: shows a top view of the cutter 20 shown in Fig. 1A, and
- Fig. 1C: shows a side view of the cutter 20 shown in Fig. 1A;
- Fig. 2A: shows a perspective view of an example counter knife 30 as disclosed herein, wherein two cutting areas 34 are arranged along the outline of the counter knife 30 and wherein each cutting area 34 comprises a cutting edge 12B having a convex surface contour;
- Fig. 2B: shows a top view of the counter knife 30 shown in Fig. 2A;
- Fig. 3A: shows a perspective view of a cutting section of a trimming device 10 as disclosed herein comprising a cutter 20 and a counter knife 30 having a complementary surface contour being convex;
- Fig. 3B: shows a magnification of the cutting areas 24, 34 of the cutting section shown in Fig. 3A;
- Fig. 4: shows schematically the build-up of the coating as disclosed herein;
- Fig. 5A: shows a perspective view of another example cutter 20 as disclosed herein, wherein eight cutting areas 24 are arranged along the outline of the cutter 20 and wherein each cutting area 24 has a buckled concave surface contour;
- Fig. 5B: shows a perspective view of another example counter knife 30 as disclosed herein, wherein two cutting areas 34 are arranged along the outline of the counter knife 30 and wherein each cutting area 34 has a buckled convex surface contour;
- Fig. 6A: shows a perspective view of another example cutter 20 as disclosed herein, wherein four cutting areas 24 are arranged along the outline of the cutter 20 and wherein each cutting area 24 has a buckled concave surface contour;
- Fig. 6B: shows a perspective view of another example counter knife 30 as disclosed herein, wherein one cutting area 34 is arranged along the outline of the counter knife 30 and wherein the cutting area 34 has a buckled convex surface contour;
- Fig. 7A: shows a perspective view of another example cutter 20 as disclosed herein, wherein four cutting areas 24 are arranged along the outline of the cutter 20 and wherein each cutting area 24 has a convex surface contour;
- Fig. 7B: shows a perspective view of another example counter knife 30 as disclosed herein, wherein one cutting area 34 is arranged along the outline of the counter knife 30 and wherein the cutting area 34 has a convex surface contour; and
- Fig. 8: shows a brush head 42 of a toothbrush being cut by cutting areas 24, 34 of a cutting section as disclosed herein.

### DETAILED DESCRIPTION OF THE INVENTION

The following description sets forth a broad description of numerous different embodiments of a method for producing an abrasion resistant cutting edge and a filament trimmer having said abrasion resistant cutting edge as proposed. The description is to be construed as exemplary only and does not describe every possible embodiment since describing every possible embodiment would be impractical, if not impossible.

In accordance with at least one aspect of the disclosure, there is provided a method for producing an abrasion resistant cutting edge suitable for trimming filaments of brushes, for example toothbrushes. Said cutting edge may be part of a cutting area of cutting devices such as cutters, knives, mills, mortisers, trimmers, razor blades, electric shavers etc.. The main body of the cutting area is manufactured from hot-working tool steel and may be shaped as protrusions, terraced protrusions, narrowing protrusions or small edges. At the surface of the most protruding part of the cutting area a recess is formed for carrying an abrasion resistant coating. Said abrasion resistant coating comprises two layers. A first material is deposited to the surface of the cutting area as a base layer. Suitable materials which can be used as the base layer are powder-metallurgical steels. A suitable method for depositing the first material may be for example laser cladding. Then, a second material comprising at least particles of carbides of one element of the fourth, the fifth, the sixth and/or the seventh group of the periodic table is deposited to the first layer. A suitable method for depositing the second material may be for example laser cladding. Finally, the resulting coating is sharpened forming a sharp cutting edge. Suitable sharpening machines may be for example grinding machines.

In one embodiment, the powder-metallurgical steel may comprise Rockwell hardness (HRc-value) in a range of about 50 to about 60, or optionally in a range of about 55 to about 60 or optionally of any individual number within the values provided or in any range including or within the values provided. In addition or alternatively, the second layer may comprise titanium carbide, niobium carbide, tantalum carbide, chromium carbide, tungsten carbide or a mixture thereof. Said example carbides may be provided in a matrix material, wherein matrix material may comprise nickel, cobalt and/or iron. The carbides may be present in the matrix material in an amount of about 60% to about 80%, or optionally in an amount of about 70% to about 80%, or optionally in an amount of about 70% to about 75% or optionally of any individual number within the values provided or in any range including or within the values provided.

Deposits achieved by laser cladding are metallurgically bound and are perfectly dense, meaning that the coating does not show any porosity. During the laser cladding steps the material of the cutting area as well as the material used for the first and/or second layer may be molten and then cooled, thereby forming a layer of heat treatable abrasion resistant steel alloy, which is metallurgically bonded to the body of the cutting area. The material of the coating may be added as fine powder. The powder may be deposited via a conveyer to the surface of the recess of the cutting edge directly. The laser beam melts the powder and forms a pool of molten cladding material. The laser and the conveyer are moved along the recess to be coated. Molten material left behind by the moving laser beam cools down and solidifies again, but now the coating material is metallurgically bound to the surface of the cutting area forming an abrasion resistant cutting edge.

In one embodiment, the abrasion resistant coating comprising the first and second layer may be applied in one or more depositing steps. The number of cladding repetitions depends on the desired thickness of the resulting layer. If the thickness of the layer is small enough to be deposited once, a single deposition step may be used. If the thickness of the layer is bigger and may not be applicable in one depositing step, two or more deposition steps may be performed, wherein the material of each deposition step is superimposed. In one embodiment, the first and/or second layers may be deposited twice. Up to three times of depositing material to the surface of the cutting area laser cladding can be performed without intermediate cooling of the body to be coated. Up to three times of depositing material to the surface of the first layer laser cladding can be performed without intermediate cooling of said first coating. Generally, the thickness of each sub-layer applied can be adjusted by regulating the amount of deposited material and the velocity of the laser.

According to the disclosed method, a coating should be applied which is sufficiently thick to allow resharpening of the cutting edge. The thicker is the second layer, the more often the abrasion resistant cutting edge can be resharpened. In one embodiment, the thickness of the first layer may be in the range of about 1mm to about 4mm, or optionally in the range of about 1.5mm to about 3mm or optionally in the range of about 2mm to about 2.5mm or optionally any individual number within the values provided or in any range including or within the values provided. In addition or alternatively, the thickness of the second layer may be in the range of about 0.1mm to about 2mm, or optionally in the range of about 0.5mm to about 1.5mm, or optionally in the range of about 0.8mm to about 1.2mm or optionally any individual number within the values provided or in any range including or within the values provided.

In one embodiment, resharpening of the applied coating may be repeated at least 15 times, or optionally at least 20 times, or optionally at least 25 times, or optionally at least 30 times before a new coating should be deposited onto the cutting edge. For sharpening and/or resharpening, abrasive wheels or grinding machines may be used to shape the deposited coating into a sharp cutting edge. In one embodiment, the coating cannot be resharpened into a sharp cutting edge again. Then, the coating may be removed totally from the cutting area and a new coating comprising at least two layers as described above can be applied. Removing of the residual amount of the abrasion resistant coating may be performed using a grinding machine or abrasive wheels.

Generally, laser cladding may be performed using a power laser emitting a monochromatic coherent light beam. In particular, a laser may be used having enough energy to melt the base metal to be coated as well as the cladding material brought in the form of fine powder. Suitable lasers which can be used are high-power diode lasers, lamp-pumped solid-state lasers, CO₂-lasers or Nd:YAG-lasers. Good results may be achieved, if the laser is used out of focus during laser cladding procedure. According to one embodiment, the laser may be used from about 0.5mm to about 10mm out of focus, or optionally from about 1mm to about 8mm out of focus, or optionally from about 2mm to about 5mm out of focus or optionally out of focus at any individual number within the values provided or any range including or within the values provided.

During laser cladding the surface of the cutting area may be melted partially during deposition of the first layer. Thereby, a metallurgic bond can be achieved between the material of the cutting area and the first layer. Thereby, a small transition zone may result comprising material of the cutting area and the first layer. "Metallurgical bound" means that the coating is fused to the surface of the cutting area in such that the microstructure at the base of the coating may be intimately linked to the microstructure of the first layer forming a transition zone.

In addition or alternatively, the surface of the first layer may be melted partially during deposition of the second layer using laser cladding. Thereby, a metallurgic bond can be achieved between the material of the first layer and the material of the second layer and a small transition zone may result comprising material of both layers. "Metallurgical bound" means here that the second layer is fused to the surface of the first layer in such that the microstructure at the base of the second layer may be intimately linked to the microstructure of the first layer forming a transition zone.

In addition or alternatively, the carbide particles may not be molten during laser cladding so that carbide particles as provided may be present in the second layer after forming the coating. Alternatively, the carbide particles may be molten during laser cladding. If the carbide particles melt during laser cladding, the carbide particles solidify again during cooling forming thin dendrites. Alternatively, the carbide particles melt partially during laser cladding so that original particles and solidified dendrites can be found in the second layer.

Due to the two step procedure a very abrasion resistant coating is achieved. The material for the cutting area of the filament trimming device can be chosen in a cost-saving manner, because no special requirements for the body of the cutting area have to be met. The abrasion resistant properties are provided by the applied coating. The applied coating comprises two different layers, namely a base layer and a layer comprising abrasion resistant particles. The first layer which may comprise powder-metallurgic steel provides an abrasion resistant coating itself, but has a lower abrasion resistance than the second layer and thus can be used as base layer or bonding layer for the second layer. However, elasticity of the coating decreases, when abrasion resistance increases, meaning that a coating which shows a high abrasion resistance may also show the formation of cracks. Said cracks are usually a result of tension due to different material properties of the main body and the coating. By depositing the second layer comprising carbide particles on top of the first layer as disclosed herein, the number of cracks is reduced. The first layer forms an ideal intermediate layer having a sufficient abrasion resistance to be a hard basis for the second layer and at the same time being elastic enough to avoid the formation of cracks. Thereby, materials having a huge amount of carbide particles can be used as second layer. Thus, the method disclosed provides a very abrasion resistant coating which does not show cracks in the surface during use.

According to another aspect, there is provided a trimming device for cutting filaments of a toothbrush having the features of claim 12.

The cutter and the counter knife may be arranged in the trimming device such that the at least one cutting edge of the cutter and the at least one cutting edge of the counter knife are located opposite to each other. In one embodiment, the cutter and the counter knife are arranged such that a gap is provided between the cutting edge of the cutter and the cutting edge of the counter knife. Said gap may be in the range of about 0.001mm to about 0.1mm, or optionally in the range of about 0.003mm to about 0.05mm, or optionally in the range of about 0.005mm to about 0.01mm or optionally any individual number within the values provided or any range including or within the values provided.

In addition or alternatively, the cutter and the counter knife may comprise a complementary surface contour. The cutting edge may comprise any surface contour which can be ground. The limitation for grinding is the diameter and/or the thickness of the grinding device. In one embodiment, the minimal corner radius of the curvature of the surface contour of the cutting edge is less than 0.5mm, or optionally less than 0.3mm, or optionally less than 0.15mm. For example, the surface contour may be a curved shape, a convex shape, a concave shape, a wavelike shape, a polygonal shape, a zigzag shape, a chamfered shape and/or any combination thereof. In another embodiment, the surface contour is a straight line. Examples for complementary surface contours are cutters having a convex surface contour being combined with a counter knife having a concave surface contour. Alternatively, two convex surface contours having a different radius can be combined as well. As another example, zigzag or wavelike shapes can be shifted to achieve a complementary profile on the surface of the cutter and the counter knife.

In one embodiment, the method for trimming toothbrush filaments may comprise the steps of removing and/or picking at least one filament tuft from a plurality of filaments. Then said at least one filament tuft is fixed and/or mounted into a tuft hole which is provided by a brush head or a part of a brush head and finally the free filament ends of the at least one filament tuft are cut using a cutting device as disclosed herein. "Removing and/or picking" as used herein shall mean any form of isolating a number of filaments from a bigger number of filaments and transferring said isolated number of filaments to a separate place. "Fixed and/or mounted" as used herein shall mean that the filament tuft is located in the tuft hole by fixing means. Suitable fixing means may be for example clamping means, attaching means or gluing means. "Tuft hole" as used herein shall mean any blind hole or through hole of any form which is located in a brush head, a brush head section, a brush head carrier or a part thereof. In one embodiment, the filament tuft is stapled using an anchor, or optionally the tuft is clamped into and/or fused to a carrier plate, and/or optionally the tuft is over-molded with plastic material.

In addition, the carbide-cut free filament ends may be end-rounded after cutting. Carbide-cut filament ends can be end-rounded easier and to a higher quality, due to the high quality of the cut. Carbide-cut filaments show very similar cutting lines and less frazzling at the free ends. At least about 1,000,000 brush heads, or optionally at least about 1,500,000 brush heads, or optionally at least about 3,000,000 brush heads can be cut as disclosed herein without a decrease in the quality of the cut.

In one embodiment, the final length of at least one filament in the filament tuft may differ from the final length of at least one other filament in the filament tuft after cutting. That means, that a surface contour being different from a flat plane can be cut using the cutting device as disclosed herein. In another embodiment, one bristle tuft is cut to one filament length so that a flat plane is achieved. In addition or alternatively, two or more filament tufts may be cut in such that the final length of at least one of the two or more filament tufts is different to the final length of the at least other filament tuft. That means, that a surface contour of a brush head being different from a flat plane can be cut using the cutting device as disclosed herein. Said surface profile may have a curved shape, a convex shape, a concave shape, a wavelike shape, a polygonal shape, a zigzag shape, a chamfered shape, or a combination thereof. In another embodiment, all bristle tufts of a brush head are cut to one filament length so that a flat plane is achieved. Cutting of a surface profile may be performed in a single cutting step. If the cutting shall be performed in one cutting step, the surface contour of the cutting edge of the cutting device corresponds to the surface contour of the brush head after cutting. Two or more cutting steps can be performed successively with the same surface profile, thereby increasing the accurateness of the profile cut. Alternatively, cutting of the filaments may be performed in two or more cutting groups. Thereby, a first group of filaments is cut first. Then the cut filaments are bent away and a second group of filaments is cut and bent away and so on.

In the following, a detailed description of several example embodiments will be given. It is noted that all features described in the present disclosure, whether they are disclosed in the previous description of more general embodiments or in the following description of example embodiments, even though they may be described in the context of a particular embodiment, are of course meant to be disclosed as individual features that can be combined with all other disclosed features as long as this would not contradict the scope of the appended claims. In particular, all features disclosed for either one of the cutter or the counter knife may also be applied to the other one.

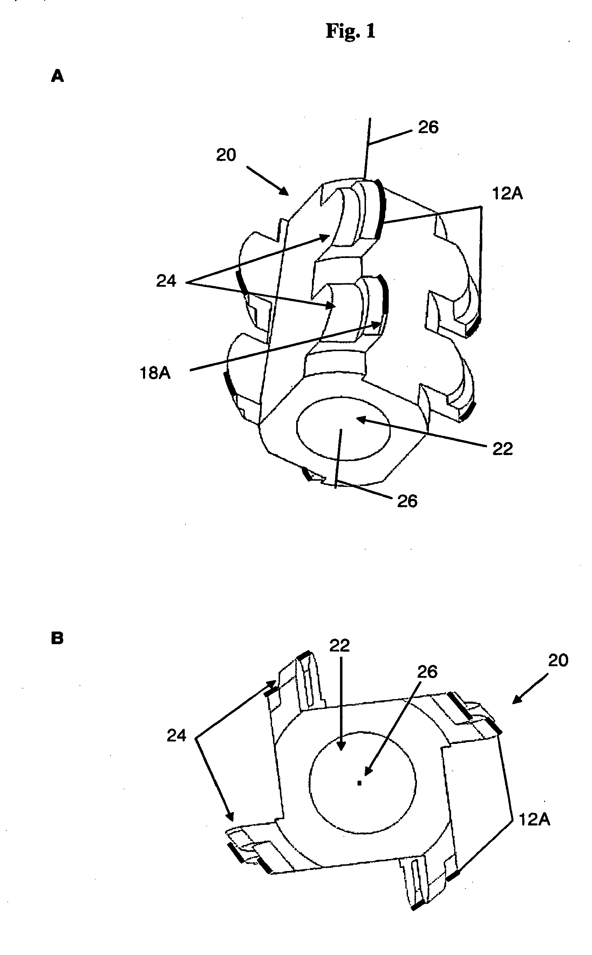

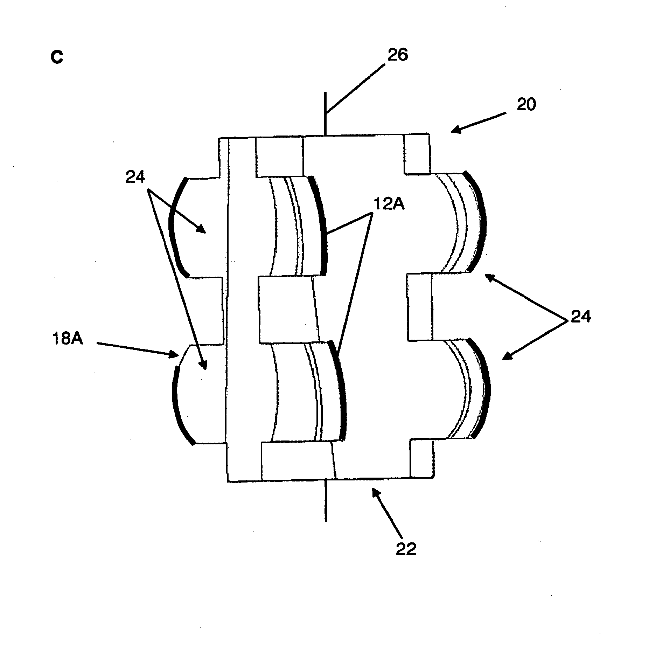

Figs. 1A to 1C show an example embodiment of a cutter 20 according to the present disclosure. Fig. 1A shows the cutter 20 in a perspective view. Fig. 1B shows a top view and Fig. 1C shows a side view of the cutter 20. In this embodiment, the cutter 20 may have an elongated rectangular main body having a cylindrical hole representing a mounting area 22. The mounting area 22 may be arranged along a longitudinal axis 26 of the cutter 20. The cutter 20 may be attached to a filament trimming device 10 by the mounting area 22 in a conventional manner. For example, a drive rod can be placed into the mounting area 22 for driving the cutter 20 circularly (not shown). At four edges being in parallel to the longitudinal axis 26 one or more cutting areas 24 may be arranged. The cutter 20 shown in Fig. 1 comprises two cutting areas 24 at each of the edges of the main body of the cutter 20 which are located in a single-plane. The cutting areas 24 may be shaped as terraced protrusions. The most protruding protrusion may be narrowed to a small edge representing the cutting edge 12A.

Each cutting edge 12A may be covered by an abrasion resistant coating. To place the coating durably, the most protruding protrusion may comprise a recess 18. Said recess 18A may be shaped to carry the abrasion resistant coating totally to form a sharp cutting edge 12A. The dimensions of the recess 18A are adapted to completely fit to the dimensions of the coating so that after deposition of the coating a surface is achieved which does not show any rough edges. The cutting edge 12A may have a surface shape which differs from a straight line. The cutting edge 12A shown in Fig. 1 shows a convex surface contour.

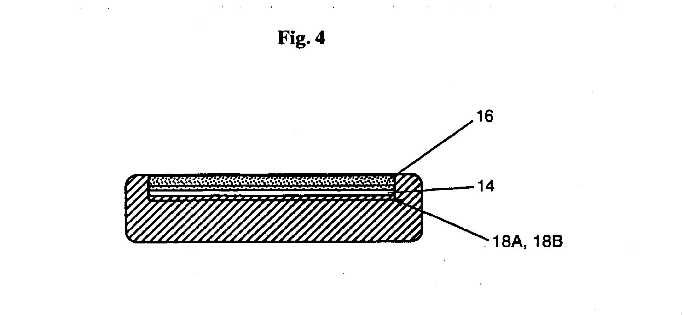

The cutter 20 is formed from hot-working tool steel. In particular, the cutter 20 may consist of X37CrMoV5-1 steel. The abrasion resistant coating may be applied by laser cladding as described above. In one embodiment, two layers of different material are deposited to each of the cutting edges 12A of the cutter 20. A first layer 14 may comprise powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating are also applicable to the coating of the cutter 20 shown in Fig. 1.

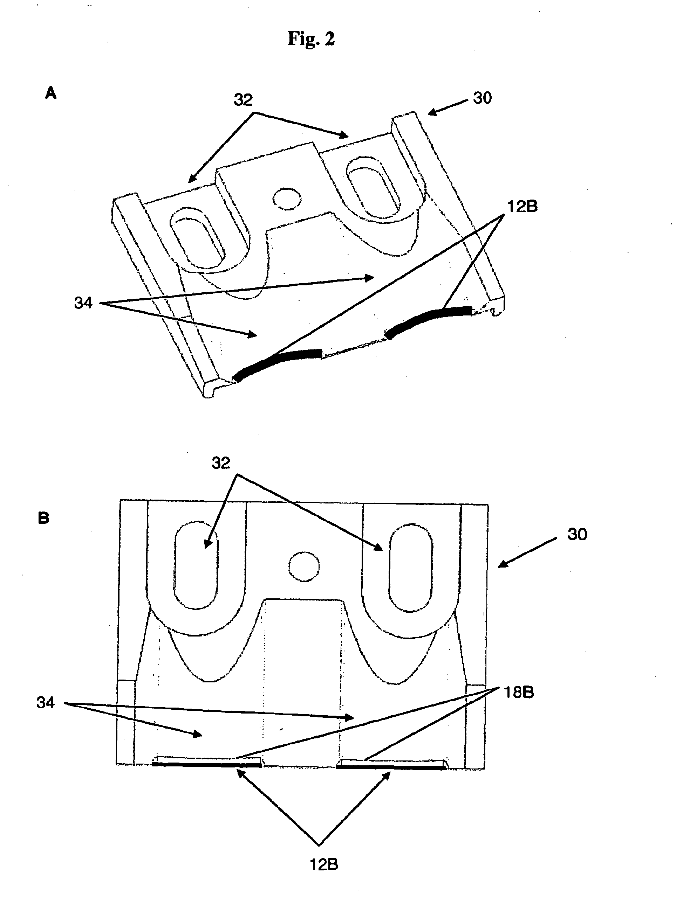

Figs. 2A and 2B show an example embodiment of a counter knife 30. Fig. 2A shows the counter knife 30 in a perspective view and Fig. 2B shows a top view of the counter knife 30. In this embodiment, the counter knife 30 may have a rectangular and flat main body. At one of the longer sides of the rectangular body mounting areas 32 may be arranged suitable to mount the counter knife 30 to a part of a trimming device 10 in a conventional manner (not shown). For example, two or more mounting areas 32 may be arranged at one side of the rectangular main body of the counter knife 30. Opposite to the mounting areas 32, in particular at another side of the main body of the counter knife 30 one or more cutting areas 34 may be arranged. The counter knife 30 shown as an example in Fig. 2 comprises two cutting areas 34 which may be shaped as elongated protrusions. The cutting areas are located adjacent to each other along one side of the counter knife 30. The most protruding end of the elongated protrusion may be narrowed to a small edge representing the cutting edge 12B. The cutting edges 12B are arranged in one single-plane.

Each cutting edge 12B is covered by an abrasion resistant coating. To place the coating durably, each most protruding part of the cutting area 34 comprises a recess 18B which is suitable to carry the coating. The dimensions of the recess 18B are adapted to completely fit to the dimensions of the coating so that after deposition of the coating a surface is achieved which does not show any rough edges. The cutting edge 12B may have a surface shape which differs from a straight line. The cutting edge 12B shown in Fig. 2 comprises a convex surface contour.

The counter knife 30 is formed by hot-working tool steel. In particular, the counter knife 30 may consist of X37CrMoV5-1 steel. The abrasion resistant coating is applied by laser cladding as described above. In one embodiment, two layers of different material are deposited to each of the cutting edges 12B of the counter knife 30. A first layer 14 may comprise powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the counter knife 30 shown in Fig. 2.

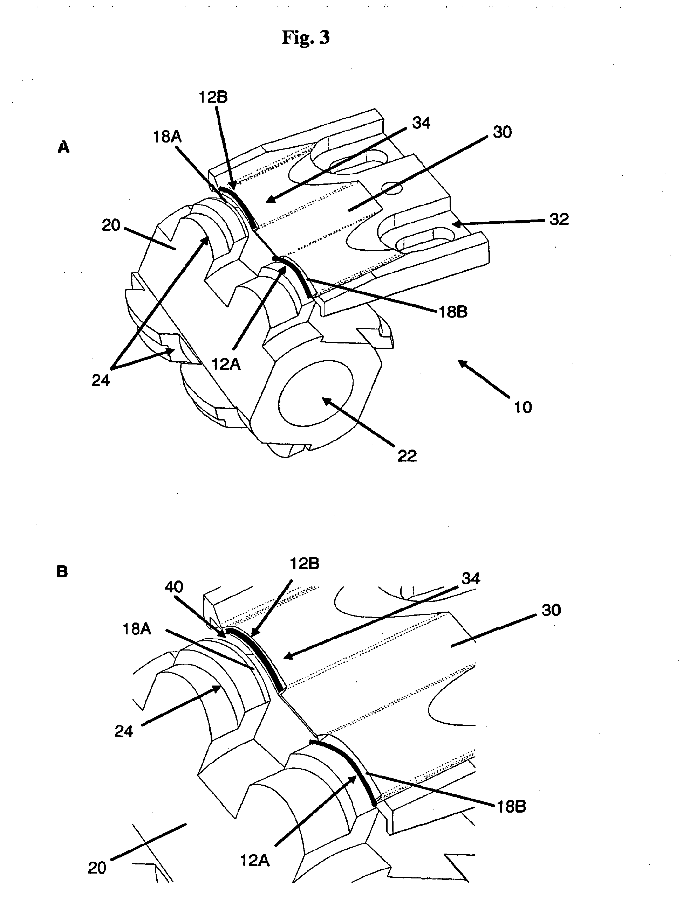

In Fig. 3, a cutter 20 and a counter knife 30 are shown in working position as an example embodiment. Fig. 3A shows a rotating cutter 20 and the counter knife 30 as a whole. Fig. 3B shows a magnification of the cutting areas 24, 34. The cutting edge 12A of the cutter 20 comprises a convex surface contour and the cutting edge 12B of the counter knife 30 comprises a convex surface contour which is complementary to the surface contour of the cutting edge 12A of the cutter 20 regarding size and shape. All features of the cutter 20 and the counter knife 30 disclosed in the embodiments shown in Figs. 1 and 2, whether described individually or in combination, are also applicable to the embodiment shown in Fig. 3. The same reference signs are used for the same features as used before in Figs. 1 and 2.

The cutting area 24 of the cutter 20 and the cutting area 34 of the counter knife 30 may be arranged opposite to each other in such that the cutting edges 12A, 12B nearly contact each other in the working position. "Nearly contact" as used herein shall mean that a small gap 40 may be arranged between the cutting edge 12A of the cutter 20 and the cutting edge 12B of the counter knife 30. The size of the gap may be in the range of about 0.001mm to about 0.1mm, or optionally in the range of about 0.003mm to about 0.05mm, or optionally in the range of about 0.005mm to about 0.0 1 mm. Using the mounting area 22 the cutter 20 may be connected to a drive rod driving the cutter 20 circularly. Drive rod and further parts of the trimming device 10 are not shown. The counter knife 30 may be connected to another part of the trimming device 10 via the mounting areas 32. Mounting to the trimming device 10 may be performed in such that position and movement of the cutter 20 and the counter knife 30 can be adjusted individually.

A rotating cutter 20 having more than one cutting area 24 may be advantageous in order to achieve a high efficacy of the trimming device 10. The cutter 20 shown in Fig. 3 as an example comprises four pairs of cutting areas 24 which may be arranged equally over the outline of the cutter 20. In the embodiment shown, four pairs of cutting areas 24 are arranged along the edges of the cutter 20. Said pairs of cutting areas 24 may be arranged in such that two cutting areas 24 nearly contact two cutting areas 34 of the counter knife 30 simultaneously during rotation of the cutter 20.

Fig. 3B shows a magnification of the cutting areas 24, 34. The coating is shown at one of the two cutting edges 12A of the cutter 20. At the other cutting area 24 the recess 18A is visualized. At the cutting area 34 of the counter knife 30 one recess 18B and one cutting edge 12B having the abrasion resistant coating are shown. In an example embodiment of the disclosure, both cutting edges 12A, 12B may be coated.

Fig. 4 shows a build-up of the coating which is deposited to the recesses 18A, 18B of the cutting edges 12A, 12B schematically. The features disclosed herein regarding the coating are disclosed generally and are applicable to all embodiments shown. The coating comprises at least a first layer 14 and a second layer 16. Both layers 14, 16 are deposited successively onto recesses 18A, 18B provided in a cutting area 24, 34 of a cutter 20 or a counter knife 30 using laser cladding. In addition, the first layer 14 and/or the second layer 16 may be applied in one or more depositing steps depending on the desired thickness of the resulting layer. In one embodiment, the first layer 14 may comprise a thickness in the range of about 1mm to about 4mm, or optionally in the range of about 1.5mm to about 3mm, or optionally in the range of about 2mm to about 2.5mm or optionally of any individual number within the values provided or in any range including or within the values provided. In addition or alternatively, the second layer 16 may comprise a thickness in the range of about 0.1mm to about 2mm, or optionally in the range of about 0.5mm to about 1.5mm, or optionally in the range of about 0.8mm to about 1.2mm, or optionally of any individual number within the values provided or in any range including or within the values provided. A thickness in the given ranges can be applied in one deposition step. Thereby, the thickness of the layer can be adjusted by regulating the amount of deposited material and the velocity of the laser. Generally, a coating should be applied which is sufficiently thick to allow resharpening of the cutting edge 12A, 12B. The thicker the second layer 16, the more often the abrasion resistant cutting edge 12A, 12B can be resharpened. In one embodiment, the second layer 16 is thicker than the first layer 14. In addition or alternatively, the second layer 16 may be applied in more than one deposition steps.

The cutting edge 12A, 12B is formed by a hot-working tool steel. Optionally, the cutting edge 12A, 12B may be manufactured from X37CrMoV5-1 steel.

In addition or alternatively, the first layer 14 may comprise powder-metallurgical steel. Said powder metallurgical steel optionally may comprise a Rockwell hardness (HRc-value) in a range of about 50 to about 60, or optionally in a range of about 55 to about 60, or optionally of any individual number within the values provided or in any range including or within the values provided. Powder-metallurgical steels which may be used are for instance CPM steels available for example from Crucible Industries LLC, 440C-steel, Vanadis23-steel, D2-steel, H19-steel, S7-steel, A2-steel, 1.4125-steel, 1.2379-steel or 1.2767-steel. Suitable CPM-steels are for example CPM S90V, CPM 9V or CPM 1V. In one embodiment, the powder-metallurgical steels may be deposited as a powder comprising particles of several shapes and/or sizes.

The second layer 16 comprises carbides of at least one element of the fourth, the fifth, the sixth and/or the seventh group of the periodic table. Suitable carbides from the fourth group may be titanium carbide, zirconium carbide, hafnium carbide or a mixture thereof. Suitable carbides from the fifth group may be vanadium carbide, niobium carbide, tantalum carbide or a mixture thereof. Suitable carbides from the sixth group may be chromium carbide, molybdenum carbide, tungsten carbide or a mixture thereof. Suitable carbides from the seventh group may be manganese carbide, rhenium carbide or a mixture thereof. Carbides of several groups can be used individually or as a mixture. In one embodiment, titanium carbide, niobium carbide, tantalum carbide, chromium carbide, tungsten carbide or a mixture thereof is used. The carbides may be deposited as a powder comprising particles of several sizes and/or shapes.

In addition, the carbides may be applied in a matrix. Suitable matrix components comprise other metals, such as elements of the eighth, the ninth, the tenth or the eleventh group of the periodic table. In one embodiment, iron, cobalt, nickel, copper or a mixture thereof may be used as matrix components. The matrix components may be mixed with the carbides before applying both components as second layer 16 to the first layer 14. In one embodiment, the second layer 16 may comprise carbides in the matrix components in an amount of about 60% to about 80%, or optionally in an amount of about 70% to about 80%, or optionally in an amount of about 70% to about 75% and/or optionally in an amount of any individual number within the values provided or in any range including or within the values provided.

In one embodiment, the surface of the recess 18A, 18B provided at the cutting edge 12A, 12B of the cutting areas 24, 34 may be molten partially during deposition of the first layer 14 using laser cladding. Thereby, a metallurgic bond can be achieved between the material of the cutting area 24, 34 and the first layer 14 and a small transition zone results comprising material of the cutting area 24, 34 and the first layer 14. Said transition zone is small enough that the first layer 14 consisting of the powder-metallurgical steels remains. In addition or alternatively, the surface of the first layer 14 may be molten partially during deposition of the second layer 16 to the first layer 14 using laser cladding. Thereby, a metallurgic bond can be achieved between material of the first layer 14 and material of the second layer 16, and a small transition zone results comprising material of the first layer 14 and of the second layer 16. Said transition zone is small enough that the first layer 14 which may consist of powder-metallurgical steels and the second layer 16 comprising carbide particles in a metal matrix remain distinguishable in the applied coating.

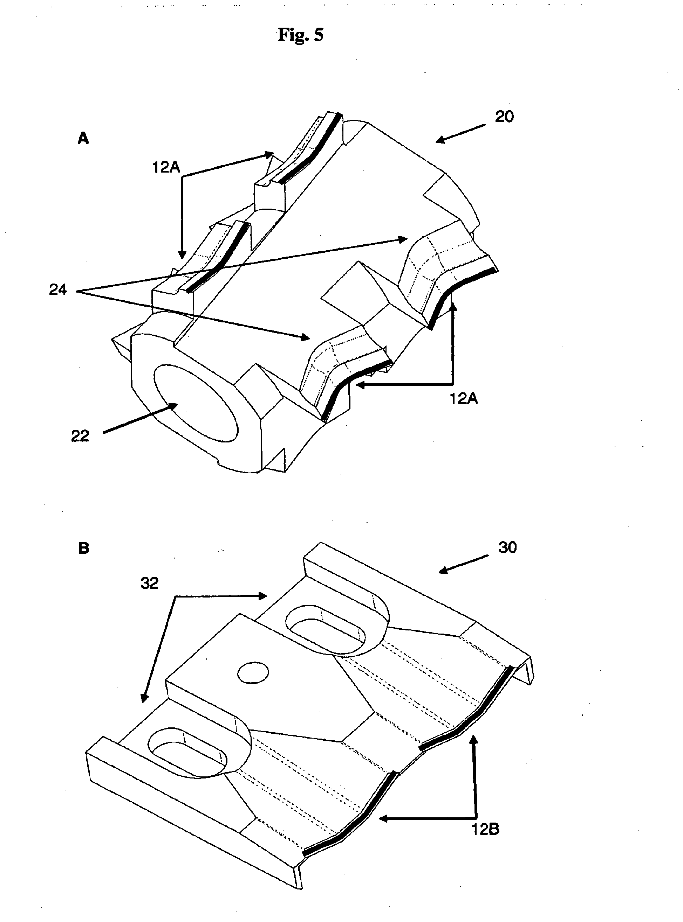

Fig. 5A shows a perspective view of another example cutter 20. The same reference signs are used for the same features as used before in Figs. 1 to 4. A rotating cutter 20 is shown having eight cutting areas 24 which are arranged in pairs along the surface of the cutter 20. Each cutting area 24 comprises a cutting edge 12A having a buckled concave surface contour. An abrasion resistant coating is applied to the cutting edge 12A. Said coating comprises two layers of different materials. A first layer 14 may comprise, for instance, powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the cutter 20 shown in Fig. 5A.

Fig. 5B shows a perspective view of another example counter knife 30. The same reference signs are used for the same features as used before in Figs. 1 to 4. A counter knife 30 is shown having two cutting areas 34 which are arranged as pairs along one side of the counter knife 30. Each cutting area 34 comprises a cutting edge 12B having a buckled convex surface contour. An abrasion resistant coating is applied to the cutting edge 12B. Said coating comprises two layers of different materials. For example, a first layer 14 may comprise powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the counter knife 30 shown in Fig. 5B. All features of the cutters 20 and the counter knives 30 which are disclosed in the embodiments shown in Figs. 1 to 3 are also applicable to the embodiment shown in Figs. 5A and 5B, independent of being described individually or in combination.

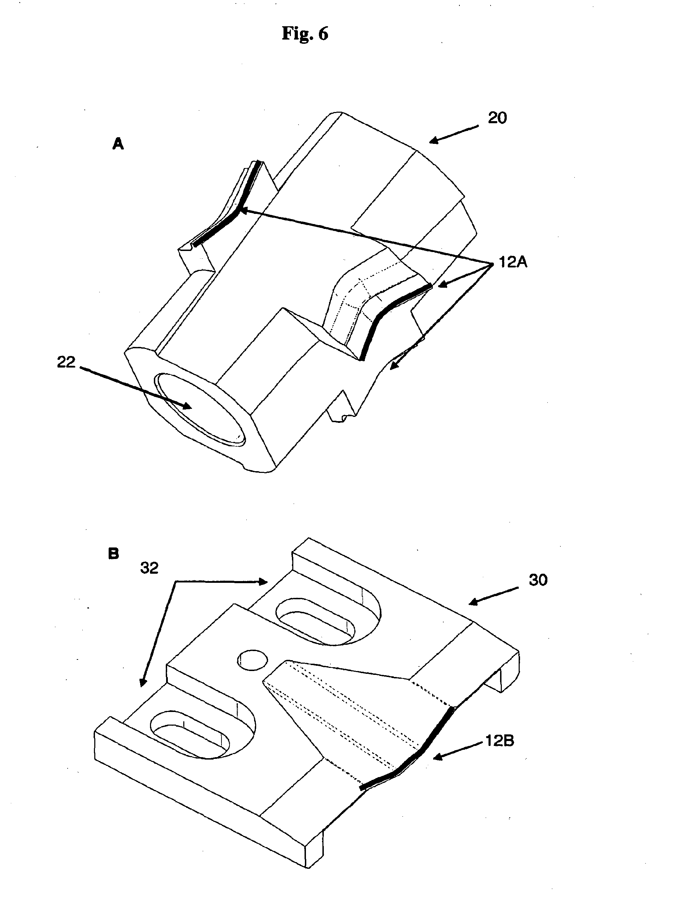

Fig. 6A shows a perspective view of another example cutter 20. The same reference signs are used for the same features as used before in Figs. 1 to 5. A rotating cutter 20 is shown having four cutting areas 24 which are arranged around the outline of the cutter 20. The cutting areas 24 are arranged in the middle of the cutter 20. Each cutting area 24 comprises a cutting edge 12A having a buckled concave surface contour. An abrasion resistant coating is applied to the cutting edge 12A. Said coating comprises two layers of different materials. For example, a first layer 14 may comprise powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the cutter 20 shown in Fig. 6A.

Fig. 6B shows a perspective view of another example counter knife 30. The same reference signs are used for the same features as used before in Figs. 1 to 5. A counter knife 30 is shown having only one cutting area 34 which is arranged in the middle of one edge of the counter knife 30. Said cutting area 34 comprises a cutting edge 12B having a buckled convex surface contour. An abrasion resistant coating is applied to the cutting edge 12B. Said coating comprises two layers of different materials. For example, a first layer 14 may comprise powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the counter knife 30 shown in Fig. 6B. All features of the cutters 20 and the counter knives 30 which are disclosed in the embodiments shown in Figs. 1 to 3 are also applicable to the embodiment shown in Figs. 6A and 6B, independent of being described individually or in combination.

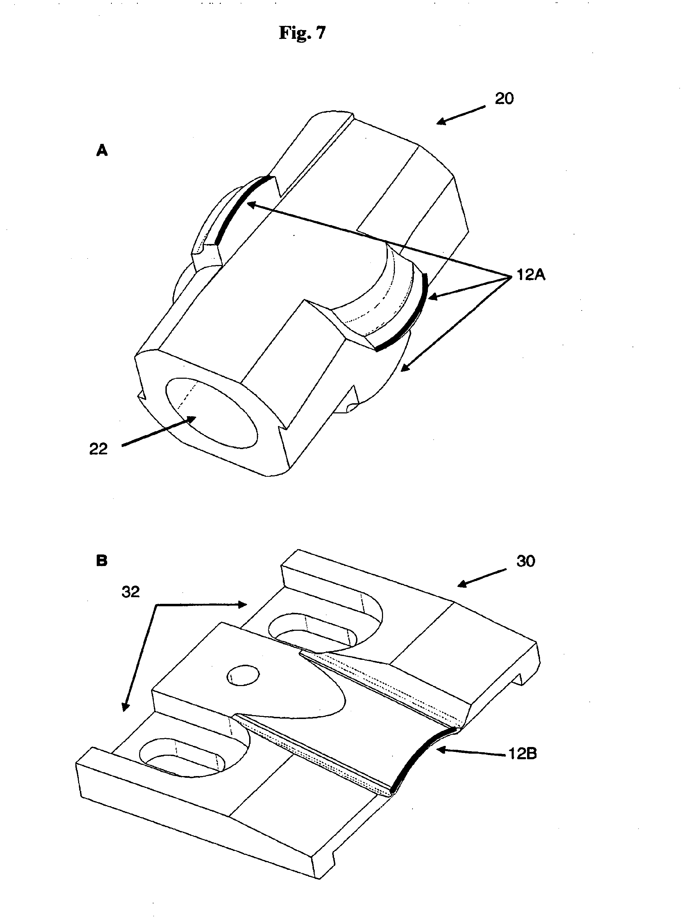

Fig. 7A shows a perspective view of another example cutter 20. The same reference signs are used for the same features as used before in Figs. 1 to 6. A rotating cutter 20 is shown having four cutting areas 24 which are arranged around the outline of the cutter 20. Further, the cutting areas 24 are arranged in the middle of the cutter 20. Each cutting area 24 comprises a cutting edge 12A having a convex surface contour. An abrasion resistant coating is applied to the cutting edge 12A. Said coating comprises two layers of different materials: For example, a first layer 14 which is a base layer and which may comprise powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the cutter 20 shown in Fig. 7A.

Fig. 7B shows a perspective view of another example counter knife 30. The same reference signs are used for the same features as used before in Figs. 1 to 6. A counter knife 30 is shown having only one cutting area 34 which is arranged in the middle of one edge of the counter knife 30. Said cutting area 34 comprises a cutting edge 12B having a convex surface contour. An abrasion resistant coating is applied to the cutting edge 12B. Said coating comprises two layers of different material: For example a first layer 14 being a base layer and which may comprise a powder-metallurgical steel. The second layer 16 comprises carbide particles of elements of the fourth, the fifth, the sixth and/or the seventh group of elements of the periodic table. A detailed description of the first layer 14 and the second layer 16 is given in connection with Fig. 4. All features disclosed in Fig. 4, whether described individually or in combination and which relate to the coating, are also applicable to the coating of the counter knife 30 shown in Fig. 7B. All further features of the cutters 20 and the counter knives 30 which are disclosed in the embodiments shown in Figs. 1 to 3 are also applicable to the embodiment shown in Figs. 7A and 7B, independent of being described individually or in combination.

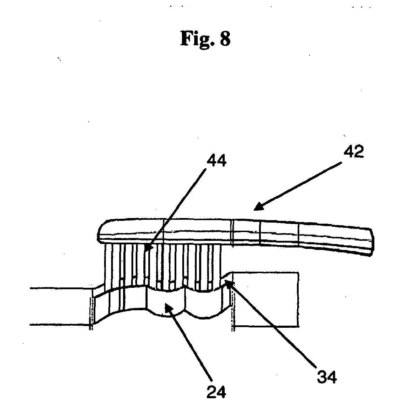

Fig. 8 shows the cutting of bristle filaments 44 of a brush head 42. Said bristle filaments 44 are cut by a cutting device 10 as disclosed herein. Two cutting edges 24, 34 having a complementary surface contour are cutting the filament ends like scissors. The resulting surface contour of the brush head 42 corresponds directly to the surface contour of the two cutting edges 24, 34.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A method for manufacturing a toothbrush filament trimmer comprising
- providing a cutter and a counter knife each consisting of hot-working steel, wherein the cutter and the counter knife comprise at least a recess suitable to carry a coating to form a cutting edge,
- depositing a first material onto the at least one recess of the cutter and/or the counter knife to form a first layer;
- depositing a second material onto each first layer to form a second layer, wherein at least a carbide of at least one element of the fourth, the fifth, the sixth and/or the seventh group of the periodic table is used as the second material, and
- sharpening the coating comprising the first layer and the second layer applied to the at least one recess of the cutter and/or to the at least one recess of the counter knife, wherein a cutting edge is formed.

2. The method according to the preceding claim, wherein powder-metallurgical steel is used as the first material.

3. The method according to anyone of the preceding claims, wherein the first layer and/or the second layer are applied by laser cladding.

4. The method according to anyone of the preceding claims, wherein the first layer and/or the second layer are applied to the recesses as a powder.

5. The method according to anyone of the preceding claims, wherein the first layer and/or the second layer are applied once or twice.

6. The method according to anyone of the preceding claims, wherein the laser is used out of focus during laser cladding, in particular from about 0.5mm to about 10mm out of focus, or from about 1 mm to about 8mm out of focus, or from about 2mm to about 5mm out of focus.

7. The method according to anyone of the preceding claims, wherein the surface of the cutter and/or the surface of the counter knife is partially melted during the deposit of the first layer.

8. The method according to anyone of the preceding claims, wherein the first layer is partially melted during the deposit of the second layer.

9. The method according to anyone of the preceding claims, wherein the step of sharpening the applied cutting edges is repeated at least 15 times, or at least 20 times, or at least 25 times, or at least 30 times.

10. The method according to anyone of the preceding claims, wherein the coating is grinded from the recesses and a new coating is deposited onto it.

11. The method according to anyone of the preceding claims, wherein a grinding machine is used to sharpen the cutting edges.

12. A filament trimming device for cutting filaments of a toothbrush comprising a cutter and a counter knife, wherein the cutter and the counter knife consist of hot-working steel, and wherein the cutter and/or the counter knife comprise at least one cutting edge, **characterized in that** the at least one cutting edge of the cutter and/or the at least one cutting edge of the counter knife comprise at least a coating comprising at least a first layer and a second layer comprising at least a carbide of at least one element of the fourth, the fifth, the sixth and/or the seventh group of the periodic table.

13. The filament trimming device according to claim 12, wherein the first layer consists of powder-metallurgical steel, in particular of powder-metallurgical steel comprising a Rockwell hardness (HRc-value) in a range of about 50 to about 60, or in a range of about 55 to about 60.

14. The filament trimming device according to claims 12 or 13, wherein the second layer comprises titanium carbide, niobium carbide, tantalum carbide, chromium carbide, tungsten carbide or a mixture thereof.

15. The filament trimming device according to anyone of claims 12 to 14, wherein the second layer comprises nickel, cobalt and/or iron.

16. The filament trimming device according to anyone of claims 12 to 15, wherein the second layer comprises the carbide in an amount of about 60% to about 80%, or in an amount of about 70% to about 80%, or in an amount of about 70% to about 75%.

## Patentansprüche

1. Verfahren zum Herstellen einer Zahnbürsten-Borstenschneidvorrichtung, umfassend:
- Bereitstellen eines Sclneidemessers und eines Gegenmessers, die jeweils aus Warmarbeitsstahl bestehen, wobei das Schneidemesser und das Gegenmesser mindestens eine Vertiefung aufweisen, die zum Tragen einer Beschichtung geeignet ist, um eine Schneidekante zu bilden,
- Ablagern eines ersten Materials auf der mindestens einen Vertiefung des Schneidemessers und/oder des Gegenmessers, um eine erste Schicht zu bilden;
- Ablagern eines zweiten Materials auf jeder ersten Schicht, um eine zweite Schicht zu bilden, wobei mindestens ein Carbid des mindestens einen Elements der vierten, der fünften, der sechsten und/oder der siebten Gruppe der Tabelle des Periodensystems als zweites Material verwendet wird, und
- Schärfen der Beschichtung, umfassend die erste Schicht und die zweite Schicht, die auf die mindestens eine Vertiefung des Schneidemessers und/oder auf die mindestens eine Vertiefung des Gegenmessers aufgetragen wurde, wobei eine Schneidekante gebildet wird.

2. Verfahren nach einem der vorhergehenden Ansprüche, wobei als erstes Material pulvermetallurgischer Stahl verwendet wird.

3. Verfahren nach einem der vorhergehenden Ansprüche, wobei die erste Schicht und/oder die zweite Schicht durch Laserauftragsschweißen aufgetragen werden.

4. Verfahren nach einem der vorhergehenden Ansprüche, wobei die erste Schicht und/oder die zweite Schicht als Pulver auf die Vertiefungen aufgetragen werden.

5. Verfahren nach einem der vorhergehenden Ansprüche, wobei die erste Schicht und/oder die zweite Schicht einmal oder zweimal aufgetragen werden.

6. Verfahren nach einem der vorhergehenden Ansprüche, wobei der Laser während des Laserauftragsschweißens außerhalb des Brennpunkts, insbesondere von ca. 0,5 mm bis ca. 10 mm außerhalb des Brennpunkts oder von ca. 1 mm bis ca. 8 mm außerhalb des Brennpunkts oder von ca. 2 mm bis ca. 5 mm außerhalb des Brennpunkts verwendet wird.

7. Verfahren nach einem der vorhergehenden Ansprüche, wobei die Oberfläche des Schneidemessers und/oder die Oberfläche des Gegenmessers während der Ablagerung der ersten Schicht teilweise geschmolzen werden.

8. Verfahren nach einem der vorhergehenden Ansprüche, wobei die erste Schicht während der Ablagerung der zweiten Schicht teilweise geschmolzen wird.

9. Verfahren nach einem der vorhergehenden Ansprüche, wobei der Schritt des Schärfens der aufgetragenen Schneidekanten mindestens 15 Mal oder mindestens 20 Mal oder mindestens 25 Mal oder mindestens 30 Mal wiederholt wird.

10. Verfahren nach einem der vorhergehenden Ansprüche, wobei die Beschichtung von den Vertiefungen abgeschliffen und eine neue Beschichtung darauf abgelagert wird.

11. Verfahren nach einem der vorhergehenden Ansprüche, wobei eine Schleifmaschine verwendet wird, um die Schneidekanten zu schärfen.

12. Borstenschneidevorrichtung zum Schneiden von Borsten einer Zahnbürste, umfassend ein Schneidemesser und ein Gegenmesser, wobei das Schneidemesser und das Gegenmesser aus Warmarbeitsstahl bestehen, und wobei das Schneidemesser und/oder das Gegenmesser mindestens eine Schneidekante umfassen,
**dadurch gekennzeichnet, dass** die mindestens eine Schneidekante des Schneidermessers und/oder die mindestens eine Schneidekante des Gegenmessers mindestens eine Beschichtung umfassen, die mindestens eine erste Schicht und eine zweite Schicht umfasst, die mindestens ein Carbid aus mindestens einem Element der vierten, der fünften, der sechsten und/oder der siebten Gruppe der Tabelle des Periodensystems umfassen.

13. Borstenschneidevorrichtung nach Anspruch 12, wobei die erste Schicht aus einem pulvermetallurgischen Stahl besteht, insbesondere aus pulvermetallurgischem Stahl, der eine Rockwell-Härte (HRc-Wert) in einem Bereich von ca. 50 bis ca. 60 oder in einem Bereich von ca. 55 bis ca. 60 umfasst.

14. Borstenschneidevorrichtung nach Anspruch 12 oder 13, wobei die zweite Schicht Titancarbid, Niobcarbid, Tantalcarbid, Chromcarbid, Wolframcarbid oder eine Mischung davon umfasst.

15. Borstenschneidevorrichtung nach Anspruch 12 bis 14, wobei die zweite Schicht Nickel, Cobalt und/oder Eisen umfasst.

16. Borstenschneidevorrichtung nach einem der Ansprüche 12 bis 15, wobei die zweite Schicht ein Carbid in einer Menge von ca. 60 bis ca. 80 % oder in einer Menge von ca. 70 % bis ca. 80 % oder in einer Menge von ca. 70 % bis ca. 75 % umfasst.

## Revendications

1. Procédé de fabrication d'un dispositif de coupe de filaments de brosse à dents, comprenant
- fournir un couteau et un contre-couteau, chacun constitué d'acier pour travail à chaud, dans lequel le couteau et le contre-couteau comprennent au moins un évidement approprié pour contenir un revêtement pour former une arête de coupe,
- déposer un premier matériau sur au moins un évidement du couteau et/ou du contre-couteau pour former une première couche ;
- déposer un second matériau sur chaque première couche pour former une deuxième couche, dans lequel au moins un carbure d'au moins un élément du quatrième, du cinquième, du sixième et/ou du septième groupe de la classification périodique des éléments est utilisé comme second matériau, et
- affûter le revêtement comprenant la première couche et la deuxième couche appliquées audit au moins un évidement du couteau et/ou audit au moins un évidement du contre-couteau, dans lequel une arête de coupe est formée.

2. Procédé selon la revendication précédente, dans lequel de l'acier de la métallurgie des poudres est utilisé en tant que le premier matériau.

3. Procédé selon l'une quelconque des revendications précédentes, dans lequel la première couche et/ou la deuxième couche sont appliquées par polissage au laser.

4. Procédé selon l'une quelconque des revendications précédentes, dans lequel la première couche et/ou la deuxième couche sont appliquées dans les évidements sous forme de poudre.

5. Procédé selon l'une quelconque des revendications précédentes, dans lequel la première couche et/ou la deuxième couche sont appliquées une fois ou deux fois.

6. Procédé selon l'une quelconque des revendications précédentes, dans lequel le laser est utilisé hors foyer lors du polissage au laser, en particulier d'environ 0,5 mm à environ 10 mm hors foyer, ou d'environ 1 mm à environ 8 mm hors foyer, ou d'environ 2 mm à environ 5 mm hors foyer.

7. Procédé selon l'une quelconque des revendications précédentes, dans lequel la surface du couteau et/ou la surface du contre-couteau est partiellement fondue lors du dépôt de la première couche.

8. Procédé selon l'une quelconque des revendications précédentes, dans lequel la première couche est partiellement fondue lors du dépôt de la deuxième couche.

9. Procédé selon l'une quelconque des revendications précédentes, dans lequel l'étape d'affûtage des arêtes de coupe appliquées est répétée au moins 15 fois, ou au moins 20 fois, ou au moins 25 fois, ou au moins 30 fois.

10. Procédé selon l'une quelconque des revendications précédentes, dans lequel le revêtement est rectifié à partir des évidements et un nouveau revêtement est déposé sur celui-ci.

11. Procédé selon l'une quelconque des revendications précédentes, dans lequel une rectifieuse est utilisée pour affûter les arêtes de coupe.

12. Dispositif de coupe de filaments pour couper les filaments d'une brosse à dents comprenant un couteau et un contre-couteau, dans lequel le couteau et le contre-couteau sont constitués d'acier pour travail à chaud, et dans lequel le couteau et/ou le contre-couteau comprennent au moins une arête de coupe,
**caractérisé en ce que** ladite au moins une arête de coupe du couteau et/ou ladite au moins une arête de coupe du contre-couteau comprend au moins un revêtement comprenant au moins une première couche et une deuxième couche comprenant au moins un carbure d'au moins un élément du quatrième, du cinquième, du sixième et/ou du septième groupe de la classification périodique des éléments.

13. Dispositif de coupe de filaments selon la revendication 12, dans lequel la première couche est constituée d'acier de la métallurgie des poudres, en particulier d'acier de la métallurgie des poudres comprenant une dureté Rockwell (valeur HRc) dans une plage d'environ 50 à environ 60, ou dans une plage d'environ 55 à environ 60.

14. Dispositif de rognage de filaments selon la revendication 12 ou 13, dans lequel la deuxième couche comprend du carbure de titane, du carbure de niobium, du carbure de tantale, du carbure de chrome, du carbure de tungstène ou un mélange de ceux-ci.

15. Dispositif de rognage de filaments selon l'une quelconque des revendications 12 à 14, dans lequel la deuxième couche comprend du nickel, du cobalt et/ou du fer.

16. Dispositif de coupe de filaments selon l'une quelconque des revendications 12 à 15, dans lequel la deuxième couche comprend le carbure en une quantité d'environ 60 % à environ 80 %, ou en une quantité d'environ 70 % à environ 80 %, ou en une quantité d'environ 70 % à environ 75 %.
